# EUROPÄISCHE PATENTSCHRIFT

(11) **EP 3 518 411 B1**
(45) Veröffentlichungstag und Bekanntmachung des Hinweises auf die Patenterteilung: **21.10.2020**
(21) Anmeldenummer: 19153515.2
(22) Anmeldetag: 24.01.2019
(51) Int. Cl.: H02M 3/335, H02M 1/00

(54) **ENERGIEVERSORGUNGSVORRICHTUNG**
POWER SUPPLY DEVICE
DISPOSITIF D'ALIMENTATION ÉLECTRIQUE

(30) Priorität: 25.01.2018 DE 102018101704
(43) Veröffentlichungstag der Anmeldung: 31.07.2019
(73) Patentinhaber: VOLKSWAGEN AKTIENGESELLSCHAFT, 38440 Wolfsburg (DE)
(72) Erfinder: Müller, Mathias, 38518 Gifhorn (DE); Nürnberg, Eugen, 29225 Celle (DE); Hoffmeister, Dennis, 38444 Wolfsburg (DE)
(74) Vertreter: Patentanwälte Bals & Vogel

(56) Entgegenhaltungen:
- DE-A1-102011 089 556
- US-A1- 2013 027 978

## Beschreibung

Die vorliegende Erfindung betrifft eine Energieversorgungsvorrichtung zur elektrischen Versorgung eines Verbrauchers eines Fahrzeuges, wobei insbesondere eine galvanische Trennung zwischen einem Eingang der Energieversorgungsvorrichtung zur Verbindung mit einer Energieversorgung (z. B. über ein Bordnetz eines Fahrzeuges) und einem Ausgang der Energieversorgungsvorrichtung zur Ausgabe einer Versorgungsspannung für den Verbraucher vorgesehen ist. In anderen Worten kann eine galvanische Trennung zwischen dem Verbraucher und der Energieversorgung vorgesehen sein. Ferner bezieht sich die Erfindung auf ein System mit der Energieversorgungsvorrichtung.

Es ist bekannt, dass Steuergeräte eines Fahrzeuges möglichst stabil mit einer Spannung des Bordnetzes versorgt werden müssen. Hierzu wird dem Steuergerät eine Energieversorgungsvorrichtung vorgeschaltet, wie z. B. ein Sperrwandler (englisch: flyback Converter). Sollte diese Stabilität nicht eingehalten werden können, z. B. aufgrund einer bordnetzseitigen Unterspannung der Eingangsspannung der Energieversorgungsvorrichtung, so müssen entsprechende Maßnahmen zur Gewährleistung eines sicheren Betriebs eingeleitet werden. Um die Maßnahmen zuverlässig einleiten zu können, wird üblicherweise zusätzlich zur Energieversorgungsvorrichtung eine Messschaltung eingesetzt, welche die Eingangsspannung der Energieversorgungsvorrichtung überwacht. Allerdings benötigt es hierbei mindestens einen Spannungssensor auf der Fahrzeugbordnetzspannungsseite, dessen Messwert dann, insbesondere galvanisch getrennt, auf die Nicht-Fahrzeugbordnetzspannungsseite des Steuergeräts optisch oder induktiv gekoppelt werden muss. Dies stellt bzgl. der schaltungstechnischen Maßnahmen eine technisch aufwendige und kostenintensive Lösung dar.

Aus der DE 10 2013 201 641 A1 sowie EP 0 815 511 B1 sind gattungsgemäße Energieversorgungsvorrichtungen bekannt, bei welchen ein separates Signal (als sogenanntes Reset-Signal) zur Signalisierung einer Unterspannung eingesetzt wird. Auch aus der US 2013/027978 A1 und DE 10 2011 089 556 A1 sind gattungsgemäße Vorrichtungen bekannt.

Es ist daher eine Aufgabe der vorliegenden Erfindung, die voranstehend beschriebenen Nachteile zumindest teilweise zu beheben. Insbesondere ist es eine Aufgabe der vorliegenden Erfindung, eine verbesserte Lösung zur Bereitstellung einer elektrischen Versorgung für einen Verbraucher eines Fahrzeuges vorzuschlagen.

Die voranstehende Aufgabe wird gelöst durch eine Energieversorgungsvorrichtung mit den Merkmalen des Anspruchs 1 und durch ein System mit den Merkmalen des Anspruchs 7. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Energieversorgungsvorrichtung beschrieben sind, selbstverständlich auch im Zusammenhang mit dem erfindungsgemäßen System, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch eine Energieversorgungsvorrichtung zur elektrischen Versorgung eines Verbrauchers eines Fahrzeuges. Die Energieversorgungsvorrichtung ist vorzugsweise als ein Gleichspannungswandler (auch: DC/DC-Konverter oder Hoch/Tiefsetzsteller) und/oder Sperrwandler ausgeführt, welcher die (vollständige) elektrische Versorgung für den Verbraucher, insbesondere eine Steuergerätespannung für den Verbraucher als ein Steuergerät, bereitstellt. Hierzu kann die Energieversorgungsvorrichtung wenigstens umfassen:
- einen Eingang zur Verbindung mit einem Bordnetz des Fahrzeuges, um eine Eingangsspannung für eine Übertragungsanordnung bereitzustellen,
- einen Ausgang zur Ausgabe einer Versorgungsspannung zum Betreiben des Verbrauchers, insbesondere zur elektrischen Verbindung mit dem Verbraucher, um bevorzugt vollständig die Energieversorgung für den Verbraucher bereitzustellen,
- die Übertragungsanordnung zur elektrischen Energieübertragung zwischen dem Eingang und dem Ausgang.

Ferner ist es möglich und für einen zuverlässigen Betrieb ggf. sinnvoll, eine galvanische Trennung zwischen dem Verbraucher und dem Bordnetz (bzw. der Eingangsspannung als eingangsseitige Versorgung für die Energieversorgungsvorrichtung) bereitzustellen. Hierzu kann die Energieversorgungsvorrichtung entsprechend angepasst sein, und bspw. wenigstens einen Optokoppler oder dergleichen aufweisen. Insbesondere kann eine galvanische Trennung zwischen dem Eingang der Energieversorgungsvorrichtung zur Verbindung mit der Versorgung (z. B. über das Bordnetz eines Fahrzeuges) und dem Ausgang der Energieversorgungsvorrichtung zur Ausgabe der Versorgungsspannung für den Verbraucher vorgesehen sein, bspw. durch eine Verschaltung des Optokopplers zwischen dem Eingang und dem Ausgang.

Es kann vorgesehen sein, dass die Übertragungsanordnung eine Signalisierungsanpassung aufweist, um in Abhängigkeit von einer für die elektrische Versorgung kritischen Abweichung der Eingangsspannung ein Signal auf die Versorgungsspannung aufzuprägen, wobei das Signal verbraucherseitig anhand der Versorgungsspannung auswertbar ist. In anderen Worten kann die Übertragungsanordnung (vorzugsweise durch Hardwareauslegung) schaltungstechnisch so beschaffen sein, dass z. B. im Fall einer zu detektierenden Unterspannung in einem Unterspannungsbereich der Eingangsspannung oder bei Unterschreiten eines kritischen Spannungswertes der Eingangsspannung, wie z. B. 6,8 V (Volt), auf der Nicht-Fahrzeugbordnetzspannungsseite (also verbraucherseitig) ein definiertes, signalhaftes Verhalten generiert wird, z. B. ein Spannungssprung oder -puls oder -muster bei der Versorgungsspannung, insbesondere am Ausgang der Energieversorgungsvorrichtung. Es ist möglich, dass dieses Signal durch eine Auswertelogik, wie eine Auswertevorrichtung des Verbrauchers, detektiert wird. Somit wird der Unterspannungsbereich bzw. das Unterspannungsereignis erkannt und es kann entsprechend durch den Verbraucher, insbesondere das Steuergerät, durch die Einleitung von Maßnahmen reagiert werden. Mögliche Maßnahmen sind z. B. eine Notlaufmaßnahme oder Abschaltung. So können bei einer Eingangsspannung unterhalb des kritischen Spannungswertes Komponenten des Verbrauchers, wie ein CAN-Controller und/oder CAN-Bus-Treiber, abgeschaltet werden. Dadurch kann insbesondere ein sicherer und zuverlässiger Betrieb gewährleistet werden.

Bei einer Nutzung der galvanischen Trennung wird zudem der Vorteil erzielt, dass auf eine Bereitstellung zusätzlicher separater galvanisch getrennter Messschaltungen verzichtet werden kann. Damit ist eine deutliche Reduzierung des technischen Aufwands und der Kosten möglich. In anderen Worten braucht die galvanische Trennung ggf. nur einmal (ausschließlich) bei der Energieversorgungsvorrichtung bereitgestellt werden.

Unter der Aufprägung des Signals wird im Rahmen der Erfindung insbesondere verstanden, dass die Versorgungsspannung am Ausgang der Energieversorgungsvorrichtung so angepasst (erzeugt) wird, dass deren zeitlicher Verlauf das Signal (bzw. das eingangsseitige Ereignis) repräsentiert. Es ist dabei möglich, dass zur Aufprägung der Verlauf der Versorgungsspannung als Ausgangsspannung der Energieversorgungsvorrichtung durch die Signalisierungsanpassung beeinflusst wird, z. B. aufgrund einer Auslegung der elektrischen Bauelemente der Übertragungsanordnung in der Weise, dass es (z. B. passiv und/oder parasitär, also nicht aktiv gesteuert) zu einem charakteristischen Verlauf der Ausgangsspannung kommt, sobald ein kritischer Spannungswert als Schwellenwert durch die Eingangsspannung unterschritten wird. Es handelt sich dabei also um eine passive Überwachung der Eingangsspannung, und somit nicht um eine aktive Messung. Auch ist es ggf. möglich, dass aktiv die Eingangsspannung überwacht und/oder gemessen wird, und dann aktiv die Ausgangsspannung beeinflusst wird (z. B. durch einen Mikrocontroller). Auch ist es optional möglich, dass die Ausgangsspannung in Abhängigkeit von der Überwachung und der kritischen Abweichung moduliert wird.

Es kann im Rahmen der Erfindung vorgesehen sein, dass eine elektrische Speicheranordnung zur Energiespeicherung vorgesehen ist. Diese kann bewirken, dass zur Kompensation eines Absinkens der Eingangsspannung die Versorgungsspannung auch während des Absinkens auf eine vordefinierte Betriebsspannungshöhe (z. B. 12 V) des Verbrauchers gehalten wird, also vorteilhafterweise im Normalbetrieb möglichst stabil und/oder konstant bereitgestellt wird. Hierbei kann die kritische Abweichung der Eingangsspannung für ein Unterschreiten eines solchen (kritischen) Spannungswertes durch die Eingangsspannung spezifisch sein, bei welchem diese Kompensation nicht (mehr) gewährleistet ist, z. B. bei einem Unterschreiten von 6,8 V.

Ferner kann im Rahmen der Erfindung vorgesehen sein, dass die Signalisierungsanpassung dazu ausgeführt ist, zur Aufprägung des Signals die Versorgungsspannung mit wenigstens einem Spannungssprung (als eine Anpassung) auszugeben, welcher unterschiedlich und/oder nichtproportional zu einem Verlauf der Eingangsspannung, insbesondere einem (weiteren) Spannungssprung und/oder Absinken der Eingangsspannung, ist. Dies ermöglicht es, zuverlässig und einfach verbraucherseitig (also durch den Verbraucher) eine Detektion der kritischen Abweichung durchzuführen. Bspw. kann das Signal auch mit wenigstens einer weiteren Anpassung (z. B. wenigstens einem weiteren andersartigen Spannungssprung) ausgebbar sein, um den Informationsgehalt zu erhöhen. Auf diese Weise können z. B. unterschiedliche Veränderungen der Eingangsspannung unterschieden werden.

So ist es vorteilhafterweise bei der erfindungsgemäßen Energieversorgungsvorrichtung möglich, dass die Signalisierungsanpassung dazu ausgeführt ist, mehrere Signale und/oder das Signal mit mehreren Stufen oder anderen (unterschiedlichen) Anpassungen aufzuprägen. Bspw. kann hierzu die Versorgungsspannung für den Verbraucher mit mehreren unterschiedlichen Spannungssprüngen (mit unterschiedlichem Hub und/oder Pegel) ausgegeben werden. Diese können den Informationsgehalt der Signalisierung erhöhen, und z. B. verschiedenen Pegeln bzw. Stufen der Eingangsspannung entsprechen. Damit ist es möglich, verbraucherseitig anhand des (wenigstens einen) Signals wenigstens eine Information mit einem höheren Informationsgehalt auszuwerten. Bspw. können dadurch verbraucherseitig verschiedene Pegel bzw. Stufen der Eingangsspannung unterschieden werden. Das Signal kann hierzu z. B. wenigstens zwei oder drei oder vier verschiedene Anpassungen aufweisen (z. B. Spannungssprünge unterschiedlicher Ausprägung).

Von weiterem Vorteil kann vorgesehen sein, dass die Signalisierungsanpassung dazu ausgeführt ist, das Signal nichtlinear und/oder sprunghaft in Abhängigkeit von der Eingangsspannung aufzuprägen. Es kann also eine derartige Anpassung, z. B. eine schaltungstechnische Anordnung und/oder Auslegung der Übertragungsanordnung, vorgesehen sein, dass bei einem zunehmenden Absinken der Eingangsspannung die Versorgungsspannung bis zur Aufprägung des Signals einen konstant gehaltenen Verlauf aufweist, und ggf. erst dann z. B. bei einem weiteren Absinken der Eingangsspannung unterhalb eines kritischen Spannungswertes von diesem konstant gehaltenen Verlauf abweicht. Der konstant gehaltene Verlauf wird bspw. dadurch erzielt, dass die Versorgungsspannung nur innerhalb einer vordefinierten Toleranz schwankt, um den sicheren Betrieb des Verbrauchers zu gewährleisten.

Ferner ist es bei Ausführungsvarianten der Erfindung möglich, dass die Energieversorgungsvorrichtung in einem Normalbetrieb eine Sperrwandler-Funktionalität aufweist, wobei vorzugsweise der Eingang und der Ausgang galvanisch voneinander getrennt sind, um die Versorgungsspannung galvanisch getrennt von der Eingangsspannung zur Versorgung des Verbrauchers zuverlässig bereitzustellen.

In einer weiteren Ausführungsvariante der erfindungsgemäßen Energieversorgungsvorrichtung kann vorgesehen sein, dass die Signalisierungsanpassung eine Überwachung der Eingangsspannung bereitstellt, um die kritische Abweichung verbraucherseitig zuverlässig anhand des aufgeprägten Signals zu detektieren. Es kann sich hierbei ggf. um eine passive Überwachung handeln, d. h. ohne dass eine Messschaltung zur Messung der Eingangsspannung zum Einsatz kommt. Stattdessen kann ein gezielt vorgegebenes elektronisches Verhalten der Übertragungsanordnung als Signalisierungsanpassung genutzt werden, da sich die Übertragungsanordnung bei Vorliegen der Abweichung in Bezug auf die ausgegebene Versorgungsspannung charakteristisch verhalten kann. Ferner kann die Signalisierungsanpassung zur Ausgabe des Signals nur mit dem Ausgang verbunden sein, um das Signal ausschließlich über die Versorgungsspannung auszugeben, sodass auf weitere Messgeräte, Signalausgänge oder dergleichen verzichtet werden kann.

Es kann optional möglich sein, dass die Energieversorgungsvorrichtung dazu ausgeführt ist, die Aufprägung des Signals, und insbesondere eine Überwachung der Eingangsspannung, ausschließlich durch eine sekundäre Funktion vorhandener Bauelemente der Übertragungsanordnung und/oder messgerätfrei, durchzuführen. Dies kann in dem Sinne erzielt werden, dass zur Bereitstellung der Signalisierungsanpassung ausschließlich solche Bauelemente genutzt und/oder mit der Signalisierungsanpassung angepasst werden, welche primär zur Bereitstellung der Gleichspannungswandler- und/oder Sperrwandler-Funktionalität eingesetzt werden.

Ebenfalls Gegenstand der Erfindung ist ein System, aufweisend:
- einen elektrischen Verbraucher für ein Fahrzeug,
- eine Energieversorgungsvorrichtung, insbesondere eine erfindungsgemäße Energieversorgungsvorrichtung, zur elektrischen Versorgung des Verbrauchers, insbesondere welche elektrisch über einen Ausgang mit dem Verbraucher verbunden ist.

Hierbei ist vorgesehen, dass die Energieversorgungsvorrichtung eine Übertragungsanordnung aufweist, um vorzugsweise ein Bordnetz des Fahrzeuges galvanisch getrennt mit dem Verbraucher zur Energieversorgung zu verbinden, und/oder um mittels einer Eingangsspannung aus dem Bordnetz des Fahrzeuges eine Versorgungsspannung zum Betreiben des Verbrauchers bereitzustellen.

Es ist optional bei dem erfindungsgemäßen System vorgesehen, dass die Übertragungsanordnung eine Signalisierungsanpassung aufweist, um in Abhängigkeit von einer für die elektrische Versorgung kritischen Abweichung der Eingangsspannung ein Signal auf die Versorgungsspannung aufzuprägen, welches durch den Verbraucher anhand der Versorgungsspannung auswertbar ist, z. B. durch eine elektronische Auswertung der Versorgungsspannung, insbesondere durch eine Auswertevorrichtung. Damit bringt das erfindungsgemäße System die gleichen Vorteile mit sich, wie sie ausführlich mit Bezug auf eine erfindungsgemäße Energieversorgungsvorrichtung beschrieben worden sind.

Vorteilhaft ist es darüber hinaus, wenn im Rahmen der Erfindung der Verbraucher als Steuergerät für das Fahrzeug ausgeführt ist, und mit wenigstens einer oder wenigstens zwei Bus-Komponente(n), wie CAN-Bus-Komponente(n), insbesondere (z. B. CAN-) Bus-Controller und/oder Bus-Treiber, verbunden ist, um eine Verbindung mit einem Bus des Fahrzeuges herzustellen. Der Bus kann dabei zur Datenübertragung zwischen dem Steuergerät und einer weiteren Fahrzeugelektronik dienen. Der Bus ist bspw. als ein Datenbus oder Feldbus oder als CAN-Bus ausgeführt, wobei CAN hierbei für Controller Area Network steht. Es kann aber auch möglich sein, dass der Bus als ein LIN-Bus (LIN steht für Local Interconnect Network), ein Flexray, ein CAN-FD (CAN with Flexible Data-Rate) oder dergleichen ausgeführt ist. Bei Unterspannung müssen dabei die Bus-Controller zuverlässig abgeschaltet werden können, um sogenannte Errorframes, die zu erhöhter Buslast, und damit zu einem Stören der Buskommunikation führen können, zu verhindern oder zu reduzieren. Hierzu kann das Signal bzw. die Auswertung des Signals dienen, wenn anhand der Auswertung die Unterspannung festgestellt wird.

Weiter ist es ggf. vorgesehen, dass zur Versorgung des Steuergeräts und/oder der wenigstens einen Bus-Komponente die Eingangsspannung durch das Bordnetz lieferbar ist, wobei eine Spannungshöhe der Versorgungsspannung in einem Normalbetrieb einer Nennspannung des Bordnetzes entspricht, und in einem Signalisierungsbetrieb bei Aufprägung des Signals unterhalb der Nennspannung fällt. Das Steuergerät ist z. B. als ein Steuergerät eines Hochvoltbatteriemanagementsystems des Fahrzeuges oder als Steuergerät einer Leistungselektronik einer elektrischen Maschine des Fahrzeuges ausgeführt. Hierbei kann es von besonderer Bedeutung sein, dass eine Unterspannung der Eingangsspannung zuverlässig detektiert werden kann, um entsprechende Maßnahmen, wie das Abschalten von Diagnosen, einleiten zu können.

Das Fahrzeug kann als Personenkraftfahrzeug und insbesondere als Elektrofahrzeug, Hybridfahrzeug, Brennstoffzellenfahrzeug, oder allgemein als ein Fahrzeug mit mehreren Spannungslagen aufgrund des Vorhandenseins einer sogenannten Traktionsspannung, ausgeführt sein, und vorzugsweise ein Bordnetz mit einer Nennspannung in Höhe von 12 V aufweisen. Insbesondere dient dieses Bordnetz zur Versorgung von wenigstens einem Verbraucher, bevorzugt dem Steuergerät. Um eine ausreichend stabile Versorgung zu gewährleisten, kann dem Steuergerät wenigstens eine erfindungsgemäße Energieversorgungsvorrichtung vorgeschaltet sein. Diese hat ggf. als eine Primärfunktion eine Gleichspannungswandler- und/oder Sperrwandlerfunktionalität, wie die Erhöhung der Stabilität der Versorgung und/oder eine galvanische Trennung, und eine Sekundärfunktion, d. h. die Überwachung der Eingangsspannung und/oder Aufprägung des Signals. Es handelt sich in anderen Worten daher bei der erfindungsgemäßen Energieversorgungsvorrichtung ggf. um einen modifizierten Gleichspannungs- und/oder Sperrwandler, welcher zusätzlich zum originären Aufbau für die Primärfunktion eine Signalisierungsanpassung zur Bereitstellung der Sekundärfunktion aufweist.

Vorteilhaft ist es zudem, wenn die Energieversorgungsvorrichtung frei von einem dedizierten und/oder separaten Signalisierungsausgang für das Signal und/oder das System frei von einem separaten Messgerät/Messeinrichtung zur Überwachung der Eingangsspannung ausgebildet ist, sodass vorzugsweise durch die Energieversorgungsvorrichtung als primäre Funktion eine Energieübertragung zwischen dem Bordnetz und dem Verbraucher und als sekundäre Funktion die Überwachung und Signalisierung der kritischen Abweichung bereitstellbar ist. Damit ist eine deutliche Kosteneinsparung möglich.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung einer erfindungsgemäßen Energieversorgungsvorrichtung sowie eines erfindungsgemäßen Systems,
- Fig. 2: ein Diagramm zur Visualisierung eines Übertragungsverhaltens der Energieversorgungsvorrichtung,
- Fig. 3: eine schematische Darstellung von Spannungskurven zur Visualisierung eines Übertragungsverhaltens der Energieversorgungsvorrichtung,
- Fig. 4: ein schematischer Aufbau einer Energieversorgungsvorrichtung.

In den nachfolgenden Figuren werden für die gleichen technischen Merkmale auch von unterschiedlichen Ausführungsbeispielen die identischen Bezugszeichen verwendet.

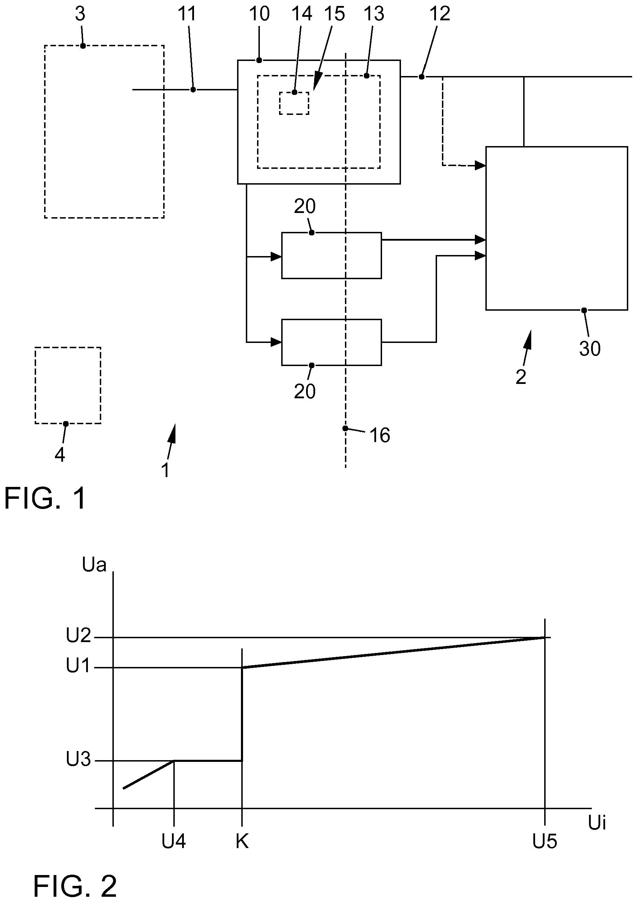

In Figur 1 sind schematisch Teile eines erfindungsgemäßen Systems mit einer erfindungsgemäßen Energieversorgungsvorrichtung 10 zur elektrischen Versorgung eines Verbrauchers 2 eines Fahrzeuges 1 gezeigt. Es ist erkennbar, dass die Energieversorgungsvorrichtung 10 (wenigstens) einen Eingang 11 zur Verbindung mit einem Bordnetz 3 des Fahrzeuges 1 aufweist, um eine Eingangsspannung Ui für eine Übertragungsanordnung 13 der Energieversorgungsvorrichtung 10 bereitzustellen. Zur Bereitstellung der Eingangsspannung Ui ist das Bordnetz 3 z. B. mit einem Energiespeicher 4 des Fahrzeuges 1, wie einer wiederaufladbaren Fahrzeugbatterie, verbunden. Der Eingang 11 umfasst bspw. einen elektrischen Anschluss, wie eine Steck- und/oder Klemmverbindung, um die elektrische Verbindung mit dem Bordnetz 3 herzustellen. Auf diese Weise kann eine elektrische Spannung aus dem Bordnetz 3 durch die Übertragungsanordnung 13 als Eingangsspannung Ui abgegriffen werden. Diese Eingangsspannung Ui hat im Normalbetrieb die Höhe der Nennspannung des Bordnetzes, z. B. 12 V, wobei während des Betriebs auch Abweichungen auftreten können, welche den Normalbetrieb ggf. beeinträchtigen. Um dennoch eine möglichst konstante Spannungsversorgung mit einer Betriebsspannungshöhe Ub für den Verbraucher 2 bereitzustellen, kann die Energieversorgungsvorrichtung 10, insbesondere als ein Gleichspannungswandler und/oder Sperrwandler, zur Stabilisierung der Spannung genutzt werden. Daher weist die Energieversorgungsvorrichtung 10 zum Betreiben des Verbrauchers 2 (wenigstens) einen Ausgang 12 zur Ausgabe einer Versorgungsspannung Ua auf, insbesondere derart, dass im Normalbetrieb die Versorgungsspannung Ua stabiler auf der Betriebsspannungshöhe Ub gehalten wird, als dies bei der Eingangsspannung Ui der Fall ist. Aus diesem Grunde ist eine Übertragungsanordnung 13 zur elektrischen Energieübertragung zwischen dem Eingang 11 und dem Ausgang 12 bei der Energieversorgungsvorrichtung 10 vorgesehen.

Ferner ist es von besonderem Vorteil, dass die Übertragungsanordnung 13 eine Signalisierungsanpassung 15 aufweist, um in Abhängigkeit von einer für die elektrische Versorgung kritischen Abweichung der Eingangsspannung Ui ein Signal S auf die Versorgungsspannung Ua aufzuprägen, welches verbraucherseitig (also durch den Verbraucher 2) anhand der Versorgungsspannung Ua auswertbar ist. Dies ermöglicht es für den Verbraucher 2, einen kritischen Zustand frühzeitig zu detektieren, ohne dass eine zusätzliche Signalisierungsleitung vorgesehen sein muss. In anderen Worten kann direkt anhand der Versorgungsspannung Ua, welche (vorzugsweise als einzige Spannung) zur Energieversorgung des Verbrauchers 2 dient, die Abweichung detektiert werden. Auf diese Weise kann auf zusätzliche Komponenten, z. B. auf ein Messgerät zur Überwachung der Eingangsspannung Ui und zur Ausgabe des Signals S, und den dadurch einhergehenden technischen Aufwand verzichtet werden. Dabei kann die kritische Abweichung darauf hindeuten, dass der Normalbetrieb nicht mehr gewährleistet ist, sodass bei erfolgter Detektion der Abweichung der Verbraucher Maßnahmen einleiten kann, um unvorhersehbare Zustände aufgrund einer mangelhaften Energieversorgung zu vermeiden. Solche Maßnahmen sind bspw. das Abschalten von (insbesondere CAN-) Bus-Treibern 20.

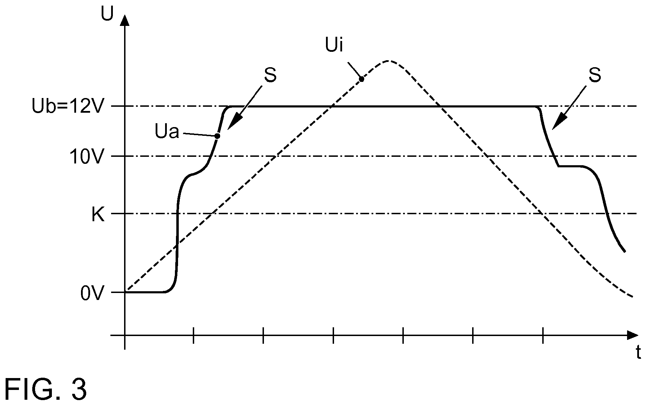

Es kann außerdem möglich sein, dass eine elektrische Speicheranordnung 14 zur Energiespeicherung vorgesehen ist, um zur Kompensation eines Absinkens der Eingangsspannung Ui die Versorgungsspannung Ua auch während des Absinkens auf eine vordefinierte Betriebsspannungshöhe Ub des Verbrauchers 2 zu halten. Dabei kann die kritische Abweichung der Eingangsspannung Ui für ein Unterschreiten eines solchen Spannungswertes K durch die Eingangsspannung Ui spezifisch sein, bei welchem die Kompensation nicht mehr gewährleistet ist. Dies wird auch anhand der in Figur 2 gezeigten Kennlinie der erfindungsgemäßen Energieversorgungsvorrichtung 10 und des Spannungsdiagramms gemäß Figur 3 deutlich.

Die Kennlinie in Figur 2 zeigt eine beispielhafte Zuordnung der Eingangsspannung Ui zur Versorgungsspannung Ua als Ausgangsspannung Ua der erfindungsgemäßen Energieversorgungsvorrichtung 10. Es ist ersichtlich, dass in einem Bereich der Eingangsspannung Ui zwischen einem kritischen Spannungswert K, z. B. in Höhe von 6,8 V, und einem höheren Spannungswert U5, z. B. in Höhe von 15 V, die Ausgangsspannung Ua im Wesentlichen konstant bei einer Betriebsspannungshöhe Ub (z. B. 12 V) gehalten wird. Im gezeigten Beispiel verläuft die Ausgangsspannung Ua in diesem Bereich zwischen U1, z. B. mit 12 V, und U2, z. B. mit 14 V, d. h., die Schwankung der Ausgangsspannung Ua ist im Vergleich zum Verlauf der Eingangsspannung Ui relativ gering. Für diesen Bereich der Eingangsspannung Ui zwischen K und U5 kann also von einem Normalbetrieb gesprochen werden. Es kommt hingegen zu einer kritischen Abweichung, wenn die Eingangsspannung Ui unterhalb K sinkt. So wird deutlich, dass unterhalb einer Eingangsspannung Ui in Höhe von U4, z. B. 6,3 V, die Ausgangsspannung Ua ebenfalls weiter absinkt, insbesondere unterhalb U3, also z. B. unterhalb 7 V. Um diese Abweichung durch den Verbraucher frühzeitig detektierbar zu machen, kann ein Signal S auf die Ausgangsspannung Ua geprägt werden. Hierzu ist im Bereich der Eingangsspannung Ui zwischen U4 und K ein Sprung der Ausgangsspannung Ua in der gezeigten Kennlinie der Energieversorgungsvorrichtung 10 vorgesehen. In anderen Worten fällt bei einem Unterschreiten der Eingangsspannung Ui unterhalb K die Ausgangsspannung Ua um U1-U3, also bspw. um 5 V. In diesem Bereich der Eingangsspannung Ui zwischen U4 und K wird also die Kompensation von Abweichungen der Eingangsspannung Ui im Normalbetrieb sowie ggf. auch die Proportionalität zwischen Eingangsspannung Ui und Ausgangsspannung Ua durchbrochen, um eine für die Abweichung erkennbar signifikante Ausgangsspannung Ua auszugeben. Dies entspricht dem Signal S, welches auf diese Weise einfach und zuverlässig detektierbar ist. Dieses Verhalten der Energieversorgungsvorrichtung 10 ist auch in Figur 3 erkennbar, in welchem ein zeitlicher Verlauf der Eingangsspannung Ui (über die Zeit t) dem zugehörigen Verlauf der Ausgangsspannung Ua gegenübergestellt ist. Beispielhaft ist hier als Betriebsspannungshöhe Ub 12 V gewählt worden, was somit dem Zielwert für die Ausgangsspannung Ua als Versorgungsspannung Ua entspricht (also die Spannung, bei welcher ein optimaler Betrieb des Verbrauchers 2 möglich ist).

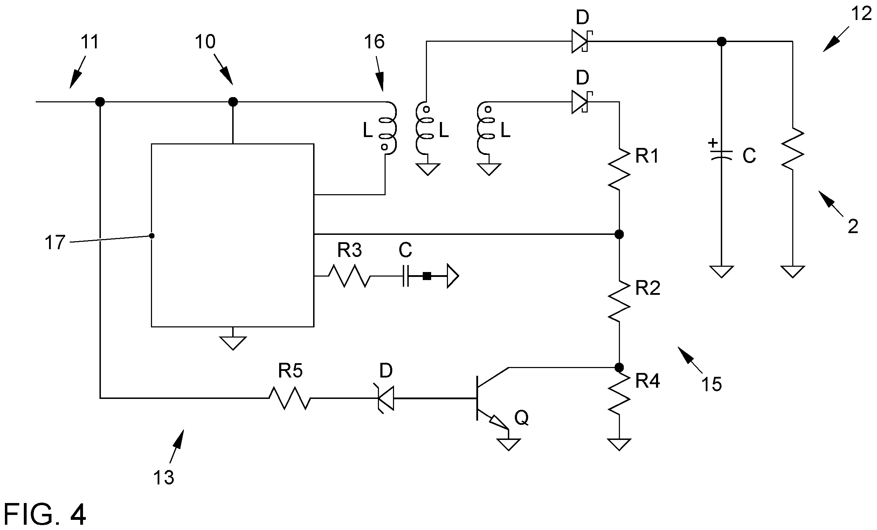

In Figur 4 ist ein beispielhafter Aufbau für die Übertragungsanordnung 13 gezeigt. Durch den gezeigten Aufbau und/oder durch eine entsprechende Auslegung der gezeigten Bauelemente kann eine Signalisierungsanpassung 15 bereitgestellt werden. So kann z. B. für einen ersten Widerstand R1 ein Wert von 10,7 Kiloohm, für einen zweiten Widerstand R2 ein Wert von 1,24 Kiloohm, für einen dritten Widerstand R3 und fünften Widerstand R5 jeweils ein Wert von 1 Kiloohm und für einen vierten Widerstand R4 ein Wert von 470 Ohm gewählt werden. Anstelle der gezeigten Spulen L zur galvanischen Trennung kann z. B. auch ein Optokoppler oder dergleichen gewählt werden. Ferner ist auch eine Reglervorrichtung 17 zur Stromreglung gezeigt, welche bevorzugt als integrierter Schaltkreis ausgeführt ist. Hierbei handelt es sich bspw. um den LT1072 von Linear Technology. Des Weiteren sind der Vollständigkeit halber noch die benötigten Dioden D, ein Transistor Q und Kondensatoren C in einer Konfiguration gezeigt, welche die Funktionalität eines Sperrwandlers für die Energieversorgungsvorrichtung 10 ermöglicht. Dabei kann die Signalisierungsanpassung 15 dazu ausgeführt sein, zur Aufprägung des Signals S die Versorgungsspannung Ua mit einem Spannungssprung auszugeben (siehe hierzu den mit dem Bezugszeichen S gekennzeichneten Sprung in Figur 3), welcher unterschiedlich und/oder nichtproportional zu einem Verlauf der Eingangsspannung Ui ist. Ein solcher beispielhafter Verlauf der Eingangsspannung Ui ist mit einer gestrichelten Linie in Figur 3 gezeigt. Auch kann es sich bei dem Verlauf der Eingangsspannung Ui, welcher die kritische Abweichung verursacht, um einen Spannungssprung und/oder ein Absinken der Eingangsspannung Ui handeln. Ferner kann die Signalisierungsanpassung 15 dazu ausgeführt sein, das Signal S nichtlinear und/oder sprunghaft in Abhängigkeit von der Eingangsspannung Ui aufzuprägen, nämlich derart, dass bei einem zunehmenden Absinken der Eingangsspannung Ui die Versorgungsspannung Ua bis zur Aufprägung des Signals S, insbesondere bis zu einem kritischen Spannungswert der Eingangsspannung Ui in Höhe von K, einen konstant gehaltenen Verlauf aufweist und erst dann vom konstant gehaltenen Verlauf abweicht (siehe hierzu auch Figur 2 und 3).

Weiterhin kann es gemäß Figur 4 möglich sein, dass die Energieversorgungsvorrichtung 10 in einem Normalbetrieb eine Sperrwandler-Funktionalität aufweist. Es können der Eingang 11 und der Ausgang 12 galvanisch voneinander getrennt sein, um die Versorgungsspannung Ua galvanisch getrennt von der Eingangsspannung Ui zur Versorgung des Verbrauchers 2 bereitzustellen. Hierzu ist wenigstens einer der in Figur 4 gezeigten Spulen L vorgesehen. Stattdessen kann ggf. auch ein Optokoppler oder dergleichen zur Bereitstellung einer galvanische Trennung 16 vorgesehen sein.

Ferner ist es möglich, dass die Signalisierungsanpassung 15 eine Überwachung der Eingangsspannung Ui bereitstellt, um die kritische Abweichung verbraucherseitig anhand des Signals S zu detektieren, wobei die Signalisierungsanpassung 15 zur Ausgabe des Signals S nur (ausschließlich) mit dem Ausgang 12 verbunden ist, um das Signal S ausschließlich über die Versorgungsspannung Ua auszugeben. In Figur 4 ist der Ausgang 12 als einziger Ausgang der Energieversorgungsvorrichtung 10 zur Energieversorgung des Verbrauchers 2 gezeigt, durch welchen gleichzeitig das Signal S ausgegeben werden kann.

Darüber hinaus kann die Energieversorgungsvorrichtung 10 dazu ausgeführt sein, die Aufprägung des Signals S, und insbesondere eine Überwachung der Eingangsspannung Ui, ausschließlich durch eine sekundäre Funktion vorhandener Bauelemente der Übertragungsanordnung 13 und/oder messgerätfrei, durchzuführen. In anderen Worten kann die Energieversorgungsvorrichtung 10 frei von einem dedizierten Signalisierungsausgang für das Signal S und/oder ein erfindungsgemäßes System frei von einem separaten Messgerät zur Messung der Eingangsspannung Ui ausgebildet sein. Dies ermöglicht es, dass durch die Energieversorgungsvorrichtung 10 als primäre Funktion eine Energieübertragung zwischen dem Bordnetz 3 und dem Verbraucher 2 und als sekundäre Funktion die Überwachung und Signalisierung der kritischen Abweichung bereitstellbar ist. Es gibt also nur ein einziges Spannungssignal Ua, welches sowohl zur Signalisierung der kritischen Abweichung als auch zur Energieversorgung dient. Eine Auswertevorrichtung 30 des Verbrauchers 2, wie z. B. ein Mikrocontroller, kann daher ggf. ausschließlich die Versorgungsspannung Ua auswerten, um bei einer Detektion der kritischen Abweichung entsprechende Maßnahmen einzuleiten. Optional ist die Auswertevorrichtung 30 mit keinem weiteren Messgerät oder dergleichen verbunden, und/oder die Überwachung und/oder Detektion der kritischen Abweichung bei dem erfindungsgemäßen System erfolgt vollständig ohne eine Messung der Eingangsspannung Ui.

In Figur 1 ist ferner gezeigt, dass der Verbraucher 2 als Steuergerät 2 für das Fahrzeug 1 ausgeführt sein kann, und mit wenigstens einem (insbesondere CAN-) Bus-Treiber 20 verbunden ist, um eine Verbindung mit einem (CAN-) Bus des Fahrzeuges 1 herzustellen. Dabei kann zur Versorgung des Steuergeräts 2 und des (CAN-) Bus-Treibers 20 die Eingangsspannung Ui durch das Bordnetz 3 geliefert werden, und eine Spannungshöhe der Versorgungsspannung Ua in einem Normalbetrieb einer Nennspannung des Bordnetzes 3 entsprechen (z. B. 12 V), und in einem Signalisierungsbetrieb bei Aufprägung des Signals S unterhalb der Nennspannung liegen. Der Signalisierungsbetrieb ist dabei in Figur 2 der Betrieb in einem Bereich der Eingangsspannung Ui zwischen U4 und K, wobei oberhalb K der Normalbetrieb vorliegt.

### Bezugszeichenliste

- 1: Fahrzeug
- 2: Verbraucher, Steuergerät
- 3: Bordnetz
- 4: Energiespeicher

- 10: Energieversorgungsvorrichtung, Gleichspannungswandler, Sperrwandler
- 11: Eingang
- 12: Ausgang
- 13: Übertragungsanordnung
- 14: Speicheranordnung
- 15: Signalisierungsanpassung
- 16: galvanische Trennung
- 17: Reglervorrichtung, Stromregler

- 20: (CAN-) Bus-Treiber

- 30: Auswertevorrichtung, Mikrocontroller

- K: kritischer Spannungswert, Schwellenwert
- S: Signal
- Ui: Eingangsspannung
- Ua: Versorgungsspannung, Ausgangsspannung
- Ub: Betriebsspannungshöhe

## Patentansprüche

1. Energieversorgungsvorrichtung (10) zur elektrischen Versorgung eines Verbrauchers (2) eines Fahrzeuges (1), aufweisend:
- einen Eingang (11) zur Verbindung mit einem Bordnetz (3) des Fahrzeuges (1), um eine Eingangsspannung (Ui) für eine Übertragungsanordnung (13) bereitzustellen,
- einen Ausgang (12) zur Ausgabe einer Versorgungsspannung (Ua) zum Betreiben des Verbrauchers (2),
- die Übertragungsanordnung (13) zur elektrischen Energieübertragung zwischen dem Eingang (11) und dem Ausgang (12), **dadurch gekennzeichnet, dass**
die Übertragungsanordnung (13) eine Signalisierungsanpassung (15) aufweist, um in Abhängigkeit von einer für die elektrische Versorgung kritischen Abweichung der Eingangsspannung (Ui) ein Signal (S) auf die Versorgungsspannung (Ua) aufzuprägen, welches verbraucherseitig anhand der Versorgungsspannung (Ua) auswertbar ist.

2. Energieversorgungsvorrichtung (10) nach Anspruch 1,
**dadurch gekennzeichnet,**
**dass** eine elektrische Speicheranordnung (14) zur Energiespeicherung vorgesehen ist, um zur Kompensation eines Absinkens der Eingangsspannung (Ui) die Versorgungsspannung (Ua) auch während des Absinkens auf eine vordefinierte Betriebsspannungshöhe (Ub) des Verbrauchers (2) zu halten, wobei die kritische Abweichung der Eingangsspannung (Ui) für ein Unterschreiten eines solchen Spannungswertes (K) durch die Eingangsspannung (Ui) spezifisch ist, bei welchem die Kompensation nicht gewährleistet ist.

3. Energieversorgungsvorrichtung (10) nach Anspruch 1 oder 2,
**dadurch gekennzeichnet,**
**dass** die Signalisierungsanpassung (15) dazu ausgeführt ist, zur Aufprägung des Signals (S) die Versorgungsspannung (Ua) mit wenigstens einem Spannungssprung auszugeben, welcher unterschiedlich und/oder nichtproportional zu einem Verlauf der Eingangsspannung (Ui), insbesondere einem Spannungssprung und/oder Absinken der Eingangsspannung (Ui), ist, um verbraucherseitig eine Detektion der kritischen Abweichung durchzuführen, wobei vorzugsweise das Signal (S) auch mit weiteren Anpassungen ausgebbar ist, um den Informationsgehalt zu erhöhen.

4. Energieversorgungsvorrichtung (10) nach einem der vorhergehenden Ansprüche,
**dadurch gekennzeichnet,**
**dass** die Signalisierungsanpassung (15) dazu ausgeführt ist, das Signal (S) nichtlinear und/oder sprunghaft in Abhängigkeit von der Eingangsspannung (Ui) aufzuprägen, derart, dass bei einem zunehmenden Absinken der Eingangsspannung (Ui) die Versorgungsspannung (Ua) bis zur Aufprägung des Signals (S) einen konstant gehaltenen Verlauf aufweist.

5. Energieversorgungsvorrichtung (10) nach einem der vorhergehenden Ansprüche,
**dadurch gekennzeichnet,**
**dass** die Energieversorgungsvorrichtung (10) in einem Normalbetrieb eine Sperrwandler-Funktionalität aufweist, wobei der Eingang (11) und der Ausgang (12) galvanisch voneinander getrennt sind, um die Versorgungsspannung (Ua) galvanisch getrennt von der Eingangsspannung (Ui) zur Versorgung des Verbrauchers (2) bereitzustellen.

6. Energieversorgungsvorrichtung (10) nach einem der vorhergehenden Ansprüche,
**dadurch gekennzeichnet,**
**dass** die Signalisierungsanpassung (15) eine Überwachung der Eingangsspannung (Ui) bereitstellt, um die kritische Abweichung verbraucherseitig anhand des Signals (S) zu detektieren, wobei die Signalisierungsanpassung (15) zur Ausgabe des Signals (S) nur mit dem Ausgang (12) verbunden ist, um das Signal (S) ausschließlich über die Versorgungsspannung (Ua) auszugeben.

7. System, aufweisend:
- einen elektrischen Verbraucher (2) für ein Fahrzeug (1),
- eine Energieversorgungsvorrichtung (10) zur elektrischen Versorgung des Verbrauchers (2),
wobei die Energieversorgungsvorrichtung (10) eine Übertragungsanordnung (13) aufweist, um mittels einer Eingangsspannung (Ui) aus einem Bordnetz (3) des Fahrzeuges (1) eine Versorgungsspannung (Ua) zum Betreiben des Verbrauchers (2) bereitzustellen,
**dadurch gekennzeichnet, dass** die Übertragungsanordnung (13) eine Signalisierungsanpassung (15) aufweist, um in Abhängigkeit von einer für die elektrische Versorgung kritischen Abweichung der Eingangsspannung (Ui) ein Signal (S) auf die Versorgungsspannung (Ua) aufzuprägen, welches durch den Verbraucher (2) anhand der Versorgungsspannung (Ua) auswertbar ist.

8. System nach Anspruch 7,
**dadurch gekennzeichnet,**
**dass** der Verbraucher (2) als Steuergerät (2) für das Fahrzeug (1) ausgeführt ist, und mit wenigstens einem Bus-Treiber (20) verbunden ist, um eine Verbindung mit einem Bus des Fahrzeuges (1) herzustellen, wobei
zur Versorgung des Steuergeräts (2) und des Bus-Treibers (20) die Eingangsspannung (Ui) durch das Bordnetz (3) lieferbar ist, und wobei
eine Spannungshöhe der Versorgungsspannung (Ua) in einem Normalbetrieb einer Nennspannung des Bordnetzes (3) entspricht, und in einem Signalisierungsbetrieb bei Aufprägung des Signals (S) unterhalb der Nennspannung liegt.

9. System nach Anspruch 7 oder 8,
**dadurch gekennzeichnet,**
**dass** die Energieversorgungsvorrichtung (10) frei von einem dedizierten Signalisierungsausgang für das Signal (S) und/oder das System frei von einem separaten Messgerät zur Überwachung der Eingangsspannung (Ui) ausgebildet ist, sodass durch die Energieversorgungsvorrichtung (10) als primäre Funktion eine Energieübertragung zwischen dem Bordnetz (3) und dem Verbraucher (2) und als sekundäre Funktion die Überwachung und Signalisierung der kritischen Abweichung bereitstellbar ist.

## Claims

1. Energy supply device (10) for supplying electricity to a consumer (2) of a vehicle (1), having:
- an input (11) for connection to an on-board power system (3) of the vehicle (1) in order to provide an input voltage (Ui) for a transfer arrangement (13),
- an output (12) for outputting a supply voltage (Ua) for operating the consumer (2),
- the transfer arrangement (13) for transferring electrical energy between the input (11) and the output (12), **characterized in that**
the transfer arrangement (13) has a signalling adjustment system (15) in order to impress a signal (S) on the supply voltage (Ua) depending on a deviation of the input voltage (Ui) that is critical to the supply of electricity, which signal is able to be evaluated on the consumer side on the basis of the supply voltage (Ua).

2. Energy supply device (10) according to Claim 1,
**characterized in that**
an electrical storage arrangement (14) for storing energy is provided in order to keep the supply voltage (Ua) at a predefined operating voltage level (Ub) of the consumer (2) in order to compensate a decrease in the input voltage (Ui) even during the decrease, wherein the critical deviation of the input voltage (Ui) is specific to the input voltage (Ui) falling below such a voltage value (K) at which the compensation is not guaranteed.

3. Energy supply device (10) according to Claim 1 or 2,
**characterized in that**
the signalling adjustment system (15), in order to impress the signal (S), is designed to output the supply voltage (Ua) with at least one voltage jump that is different from and/or not proportional to a profile of the input voltage (Ui), in particular a voltage jump and/or decrease in the input voltage (Ui), in order to detect the critical deviation on the consumer side, wherein the signal (S) is preferably also able to be output with further adjustments in order to increase the information content.

4. Energy supply device (10) according to one of the preceding claims,
**characterized in that**
the signalling adjustment system (15) is designed to impress the signal (S) in a non-linear and/or jumpy manner depending on the input voltage (Ui) such that the supply voltage (Ua) has a profile that is kept constant until the signal (S) is impressed in the event of an increasing decrease in the input voltage (Ui).

5. Energy supply device (10) according to one of the preceding claims,
**characterized in that**
the energy supply device (10) has a flyback converter functionality in a normal mode, wherein the input (11) and the output (12) are galvanically isolated from one another in order to provide the supply voltage (Ua) in a manner galvanically isolated from the input voltage (Ui) for supplying the consumer (2).

6. Energy supply device (10) according to one of the preceding claims,
**characterized in that**
the signalling adjustment system (15) provides monitoring of the input voltage (Ui) in order to detect the critical deviation on the consumer side on the basis of the signal (S), wherein the signalling adjustment system (15), in order to output the signal (S), is connected only to the output (12) in order to output the signal (S) solely via the supply voltage (Ua).

7. System, having:
- an electrical consumer (2) for a vehicle (1),
- an energy supply device (10) for supplying electricity to the consumer (2),
wherein the energy supply device (10) has a transfer arrangement (13) in order to provide a supply voltage (Ua) for operating the consumer (2) by way of an input voltage (Ui) from an on-board power system (3) of the vehicle (1),
**characterized in that** the transfer arrangement (13) has a signalling adjustment system (15) in order to impress a signal (S) on the supply voltage (Ua) depending on a deviation of the input voltage (Ui) that is critical to the supply of electricity, which signal is able to be evaluated by the consumer (2) on the basis of the supply voltage (Ua).

8. System according to Claim 7,
**characterized in that**
the consumer (2) is designed as a controller (2) for the vehicle (1) and is connected to at least one bus driver (20) in order to create a connection to the bus of the vehicle (1), wherein
the input voltage (Ui) is able to be delivered by the on-board power system (3) in order to supply the controller (2) and the bus driver (20), and wherein
a voltage level of the supply voltage (Ua), in a normal mode, corresponds to a nominal voltage of the on-board power system (3) and, in a signalling mode in which the signal (S) is impressed, is below the nominal voltage.

9. System according to Claim 7 or 8,
**characterized in that**
the energy supply device (10) is designed without a dedicated signalling output for the signal (S) and/or the system is designed without a separate measuring device for monitoring the input voltage (Ui), such that the energy supply device (10) is able to provide a transfer of energy between the on-board power system (3) and the consumer (2) as primary function and the monitoring and signalling of the critical deviation as secondary function.

## Revendications

1. Dispositif d'alimentation en énergie (10) destiné à l'alimentation électrique d'un récepteur (2) d'un véhicule (1), comprenant :
- une entrée (11) destinée à la liaison à un réseau de bord (3) du véhicule (1) afin de fournir une tension d'entrée (Ui) pour un arrangement de transmission (13),
- une sortie (12) destinée à délivrer une tension d'alimentation (Ua) servant à faire fonctionner le récepteur (2),
- l'arrangement de transmission (13) pour la transmission d'énergie électrique entre l'entrée (11) et la sortie (12), **caractérisé en ce que**
l'arrangement de transmission (13) possède une adaptation de signalisation (15) afin de, en fonction d'un écart de la tension d'entrée (Ui) critique pour l'alimentation électrique, appliquer à la tension d'alimentation (Ua) un signal (S) qui peut être interprété du côté du récepteur à l'aide de la tension d'alimentation (Ua).

2. Dispositif d'alimentation en énergie (10) selon la revendication 1, **caractérisé en ce qu'**un arrangement de stockage d'électricité (14) destiné au stockage d'énergie est présent, servant à compenser une chute de la tension d'entrée (Ui) afin de maintenir la tension d'alimentation (Ua) même pendant la chute à un niveau de tension de service (Ub) prédéfini du récepteur (2), l'écart critique de la tension d'entrée (Ui) étant spécifique à une valeur de tension (K) à laquelle, lorsque la tension d'entrée (Ui) devient inférieure à celle-ci, la compensation n'est plus garantie.

3. Dispositif d'alimentation en énergie (10) selon la revendication 1 ou 2, **caractérisé en ce que** l'adaptation de signalisation (15) est réalisée pour, en vue d'appliquer le signal (S), délivrer la tension d'alimentation (Ua) avec au moins un saut de tension qui est différent et/ou non proportionnel à un tracé de la tension d'entrée (Ui), notamment à un saut de tension et/ou une chute de la tension d'entrée (Ui), afin d'effectuer une détection de l'écart critique du côté du récepteur, le signal (S) pouvant de préférence également être délivré avec des adaptations supplémentaires afin d'augmenter le contenu d'informations.

4. Dispositif d'alimentation en énergie (10) selon l'une des revendications précédentes, **caractérisé en ce que** l'adaptation de signalisation (15) est réalisée pour appliquer le signal (S) de manière non linéaire et/ou par saut en fonction de la tension d'entrée (Ui) de telle sorte que lors d'une baisse croissante de la tension d'entrée (Ui), la tension d'alimentation (Ua) présente un tracé maintenu constant jusqu'à l'application du signal (S).

5. Dispositif d'alimentation en énergie (10) selon l'une des revendications précédentes, **caractérisé en ce que** le dispositif d'alimentation en énergie (10) possède, dans un fonctionnement normal, une fonctionnalité de convertisseur à blocage, l'entrée (11) et la sortie (12) étant isolées galvaniquement l'une de l'autre afin de fournir la tension d'alimentation (Ua) isolée galvaniquement de la tension d'entrée (Ui) pour l'alimentation du récepteur (2).

6. Dispositif d'alimentation en énergie (10) selon l'une des revendications précédentes, **caractérisé en ce que** l'adaptation de signalisation (15) fournit une surveillance de la tension d'entrée (Ui) afin de détecter l'écart critique du côté du récepteur à l'aide du signal (S), l'adaptation de signalisation (15) étant, en vue de délivrer le signal (S), reliée uniquement à la sortie (12) pour délivrer le signal (S) exclusivement par le biais de la tension d'alimentation (Ua).

7. Système, comprenant :
- un récepteur (2) électrique pour un véhicule (1),
- un dispositif d'alimentation en énergie (10) destiné à l'alimentation électrique du récepteur (2),
le dispositif d'alimentation en énergie (10) possédant un arrangement de transmission (13) afin de fournir, au moyen d'une tension d'entrée (Ui) provenant d'un réseau de bord (3) du véhicule (1), une tension d'alimentation (Ua) servant à faire fonctionner le récepteur (2), **caractérisé en ce que** l'arrangement de transmission (13) possède une adaptation de signalisation (15) afin de, en fonction d'un écart de la tension d'entrée (Ui) critique pour l'alimentation électrique, appliquer à la tension d'alimentation (Ua) un signal (S) qui peut être interprété par le récepteur (2) à l'aide de la tension d'alimentation (Ua).

8. Système selon la revendication 7, **caractérisé en ce que** le récepteur (2) est réalisé sous la forme d'un contrôleur (2) pour le véhicule (1) et est relié à au moins un circuit pilote de bus (20) afin d'établir une liaison avec un bus du véhicule (1), la tension d'entrée (Ui) pouvant être délivrée par le réseau de bord (3) en vue de l'alimentation du contrôleur (2) et du circuit pilote de bus (20), et une amplitude de tension de la tension d'alimentation (Ua) dans un fonctionnement normal correspondant à une tension nominale du réseau de bord (3) et étant inférieure à la tension nominale dans un mode de signalisation lors de l'application du signal (S).

9. Système selon la revendication 7 ou 8, **caractérisé en ce que** le dispositif d'alimentation en énergie (10) est configuré exempt d'une sortie de signalisation dédiée pour le signal (S) et/ou le système est configuré exempt d'un appareil de mesure séparé pour la surveillance de la tension d'entrée (Ui), de sorte que le dispositif d'alimentation en énergie (10) peut fournir en tant que fonction primaire une transmission d'énergie entre le réseau de bord (3) et le récepteur (2) et en tant que fonction secondaire la surveillance et la signalisation de l'écart critique.
